(19) **Europäisches Patentamt / European Patent Office / Office européen des brevets**

(11) **EP 4 667 914 A1**

(12) **EUROPEAN PATENT APPLICATION**

(43) Date of publication:
24.12.2025 Bulletin 2025/52

(21) Application number: 24382670.8

(22) Date of filing: 20.06.2024

(51) International Patent Classification (IPC):
*G01N 21/80* (2006.01) *G01N 21/27* (2006.01)

(52) Cooperative Patent Classification (CPC):
**G01N 21/274; G01N 21/272; G01N 21/80;
G01N 31/221;** G01N 21/554; G01N 21/65;
G01N 2021/7773; G01N 2021/7779;
G01N 2021/7783; G01N 2021/7786;
G01N 2201/0221

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Universidad de Granada**
**18071 Granada (ES)**

(72) Inventors:
• **MEDINA CASTILLO, Antonio Luis**
**18071 Granada (ES)**
• **LÓPEZ AVEIGA, Melany Gisell**
**18071 Granada (EC)**
• **FERNÁNDEZ RAMOS, María Dolores**
**18071 Granada (ES)**
• **MARTOS NÚÑEZ, Vanessa**
**18071 Granada (ES)**
• **CAPITÁN VALLVEY, Luis Fermín**
**18071 Granada (ES)**
• **GONZÁLEZ CASADO, Antonio**
**18071 Granada (ES)**

(74) Representative: **Cueto, Sénida**
**SP3 Patents S.L.**
**Los Madroños, 23**
**28891 Velilla de San Antonio (ES)**

(54) **OPTICAL KINETIC METHOD FOR THE DETERMINATION OF TOTAL OR VOLATILE ACIDITY**

(57) The present invention refers to an optical kinetic method for the determination of the total or volatile acidity of a sample, which comprises:
- a) carrying out a kinetic calibration of an optically pH-sensitive material
- b) contacting a sample with the optically pH-sensitive material,
- c) measuring a change in an optical property of the optically pH-sensitive material produced by a reaction in heterogenous phase between the free hydronium ions ($H_3O^+$) of the sample and the optically pH-sensitive material, during a constant reaction time,
- d) detecting a signal corresponding to the change in the optical property,
an its use in the industry, for example, in the food industry.

FIGURE 1

**Description**

**FIELD OF THE INVENTION**

The present invention is encompassed in the field of analytical chemistry, more specifically in the area of devices for measuring total or volatile acidy in a liquid sample, for example, in the food industry.

**BACKGGROUND OF THE INVENTION**

The acidity of food and beverages plays a fundamental role in the food industry and its control and quantification is essential. The main short-chain soluble organic acids present in beverages (vinegar, milk, wine, juice, etc.) are lactic, tartaric, citric, malic, succinic, and acetic (these acids are produced naturally during fermentation processes). In addition to being natural components of many foods and beverages, lactic, tartaric, citric, malic, succinic, and acetic acids are also widely used in the food industry as antioxidants, flavor enhancers, or additives to control pH.

in Article 120 octies, first paragraph, Regulation (EC) No 1234/2007 of Council (DO L 299 de 16.11.2007) two parameters (total or titratable acidity: TA and volatile acidity: VA) are established to regulate and control the acid content in wine and other beverages. TA is the concentration of all the protons available in a sample (both those that are free in solution as $H_3O^+$ and those that are part of undissociated acids) expressed as g/L of the majority acid present in the sample. On the other hand, VA refers to the concentration of all the protons coming only from the volatile acids present in the sample (a volatile acid is one that has a high vapor pressure at room temperature and, therefore, can be perceived as a smell), and is expressed as g/L of the major volatile acid of the sample. The European Union establishes two official methods, based on classical titration with sodium hydroxide, for the analysis of TA (method: AS-313-01-ACITOT) and VA (method: AS-313-02-ACIVOL for VA.

As examples, wherein the control of these parameters is very important and mandatory, we can highlight the wine and vinegar. The main acids present in vinegar are tartaric, citric, malic, succinic, and acetic (these acids are produced naturally during fermentation processes), with acetic acid being the majority. Therefore, the TA of vinegar is the concentration of all available protons in a vinegar sample (both those that are free in solution as $H_3O^+$ and those that are part of undissociated acids: tartaric, citric, malic, succinic, acetic, etc.) expressed in g/L of acetic acid (majority acid). On the other hand, considering that acetic acid is the main volatile acid present in the vinegar, and that its concentration is extremely high with respect to the rest of the volatile acids, the VA of vinegar is expressed as the concentration of acetic acid. Just like in vinegar, TA of a wine is the result of the contribution of non-volatile acids, such as malic and tartaric, plus volatile acids. However, in wine, the majority acid component is tartaric acid, so, TA is expressed as g/L of tartaric acid (majority acid). A measure of VA is used routinely as an indicator of wine spoilage. Although generally VA in wine is interpreted as acetic acid content (in g/L), it also includes all those steam-distillable acids, and thus, significant contributions to VA (by steam distribution) of wine may be made by carbon dioxide (as carbonic acid); sulfur dioxide (as sulfurous acid).

Although fast, simple and inexpensive analytical techniques have made great strides in recent years, surprisingly no such methodology exists for determining TA and VA in real samples, with classical titration therefore being the only method capable of accurately determining TA and VA economically and in a relatively short time. Titration consists of direct titration with sodium hydroxide in the presence of phenolphthalein. However, this method has some drawbacks, such as the visual identification of the endpoint can lead to quantification errors, is non-eco-friendly (generating corrosive and toxic sodium hydroxide solutions containing disposable pH colorimetric dyes), does not allow the possibility of quick and easy analysis integrated into the production area, and is time-consuming: samples must be collected, transported and stored, and the analysis must also be performed in a laboratory by a specialized technician. Nowadays, enzymatic methods have been developed as an alternative to titration to specifically analyze the concentration of acetic acid in food samples (volatile acidity). However, these methods require very expensive and unstable reagents (enzymes), long analysis times, present many interferences, and have a low reproducibility. Alternatively, conventional instrumental methods such as capillary electrophoresis, ion exclusion chromatography with conductimetric detection, and liquid and gas chromatography coupled with mass spectrometry can also be used to determine TA and VA. However, these techniques have many drawbacks, including tedious sampling methods, sample transport and storage, tedious and time-consuming sample and analysis treatments, large quantities of not environmentally friendly solvents, they use very expensive methods that require expensive equipment and specialized technicians, and do not offer the possibility of quick and easy analysis integrated into the production system. Therefore, the development of simple and compact sensors capable of quantifying TA and VA in real samples would provide the food industry with a valuable tool for process and quality control. Gas sensor devices are a promising alternative for real-time monitoring of volatile organic acids in food samples. Most gas sensors are based on a metal oxide semiconductor (MOS), whose electrochemical response is quite fast and reproducible. However, these gas sensors are commonly very sensitive to humidity and, other volatile compounds such as alcohols, aldehydes, ketones, etc, which greatly affect the precision and accuracy of the measurements.

Gas sensors measure the concentration of compounds in the atmosphere (in the gas phase, not in solution) and the humidity present in the atmosphere (gas phase) negatively interferes in the measurements of this type of sensors. With the sensor of the present invention humidity does not affect at all, since the measurement is directly carried out in solution.

Optical sensors have some advantages over electrochemical sensors, such as the absence of electrical interferences, and measurement at different wavelengths with a wide variety of possibilities: transmittance, reflectance, luminescence (with its multiple modes: intensity or polarization, decay time, energy transfer, and quenching efficiency), infrared and Raman spectroscopy, interferometry, and surface plasmon resonance. Other advantages include the possibility to work in humid/aggressive/corrosive/radioactive environments where electrochemical sensors are not operational, cost-effectiveness, the possibility of measuring remotely and at a distance, they can be read without physical contact with the sample, easy miniaturization, etc [1, 2]. Therefore, portable fiber-optic sensors are, an attractive solution for analysed many parameters in the food industry [3]. Many fiber-optic sensors have been developed to sense gaseous acetic acid and other similar volatile compounds in the atmosphere (gas phase) [3, 4]. However, to the best of our knowledge, only two fiber-optic sensors have been developed for the quantification of the concentration of short-chain soluble organic acids in solutions, but none of them meet the requirements for application in real samples (e.g. vinegar, wine, etc.). Kurauchi et al [5] reported a fiber-optic sensor having a chitosan/poly(vinyl alcohol) cladding for the detection of the concentration of organic acids in an aqueous solution. However, this fiber-optic sensor presents a strong interference from ethanol, and the authors cannot use it to measure the acetic acid concentration or TA of real samples. On the other hand, Jesus C. et al [6] have developed a sensing probe based on a fiber Bragg grating (FBG) Fabry-Perot cavity, coated with a thin film of sol-gel-PVP (polyvinylpyrrolidone) composite material. The polymeric thin film renders the interferometric output sensitive to the presence of carboxylic acid species. This optical sensor has a linear and reversible response and short response times with adequate reproducibility and repeatability. However, as the authors state, their results show that the sensor responds non-specifically to both short-chain carboxylic species and other types of molecules of similar size such as alcohols, aldehydes, etc., which does not allow its use for the analysis of real samples.

The method with the sensor of the invention measures total concentration of acid. Unlike other methods, the method based on the use of the sensor of the invention is not affected by the presence of other types of molecules present in the real samples, such as aldehyde alcohols, ketones.

Many optical probes with different pKa values are available for measuring pH in acidic or basic media. This allows pH to be measured optically, both in acidic and basic media: the optical properties of these probes (luminescent, absorbance, color, etc.) increase or decrease as the pH of the medium varies, and this allows calibration to be carried out based on measurements of the intensity of the optical property vs. pH. Optical pH sensors based on the immobilization (using different techniques) of these optically pH-sensitive probes, into fiber optic devices, are already on the market (https://www.pyroscience.com/en/products/laboratory-solutions). However, these devices can only measure pH changes in certain ranges, with sensitivities not exceeding 0.1 pH units (at most), so they are not useful for measuring the concentration of acid (TA and VA) in samples with similar pH (e.g. different vinegar or wine samples where pH variations between samples do not exceed of 0.01 pH units).To perform an optical quantification of the TA and VA in samples like vinegar and wine (acid samples) through pH changes, an optical pH-sensitive probe capable of detecting changes in the order of 0.01 pH units would be required. To the best of our knowledge, there are no fluorescent pH probes with such a high sensitivity. To quantitatively analyze the above statement, let's use vinegar as an example. The total acidity of commercial vinegar ranges between 5% and 8% (w/v), which can be translated into a minimum (0.83M) and maximum (1.33M) concentration of acetic acid, respectively. Furthermore, considering the acidity constant of acetic acid ($Ka=1.75 \times 10^{-5}$), the minimum concentration (0.83M) is translated into $[H_3O^+] = 0.0038M \rightarrow pH=2.41$, and for the maximum concentration (1.33M), we have $[H_3O^+] = 0.0048M \rightarrow pH=2.31$. Therefore, to quantify the total acidity of vinegar by measuring pH changes with an optical pH-sensitive probe, it should be able to detect changes of 0.01 pH units in the pH interval [2-3], which far exceeds by far the sensitivity limits of available pH-sensitive probes (as mentioned above, the maximum sensitivity of these probes is 0.1 pH units). For this reason, optical sensors based on optically pH-sensitive probes have not been developed for the quantification of total and volatile acidity in real samples.

The present invention solves this problem, by developing an optical technology that allows using conventional optically pH-sensitive probes, to determine in a simple, direct, fast, clean, and cheap way, the total and volatile acidity in real samples (wine, vinegar, juices, water and others).

According to the present invention, an optical method for the quantification of total and volatile acidity in real samples using a conventional optically pH-sensitive probe is provided.


## DESCRIPTION OF THE INVENTION

It is well known that the rate of an elementary chemical reaction is proportional to the concentration of reactants in solution. Therefore, based on the protonation rate (in solution) of an optically pH-sensitive probe, a kinetic calibration method has been developed for the determination of total and volatile acidity in real samples (wine, vinegar, water, etc.). Once the calibration is made, there is no need to repeat it.

For the development of the kinetic method of the invention, it is necessary to establish, experimentally, the relationship between the total concentration of acid in solution and the % of protonation of an optical pH-sensitive material (which is equivalent to the intensity of the optical property of said material, for a constant reaction time. In this way, at a constant reaction time, the higher the concentration of reagent (acid), the greater the protonation rate of the optically pH-sensitive probe, and, therefore, the greater the change in the optical property (thus obtaining the calibrated [acid] curve vs. optical intensity; t reaction= constant). However, the development of this kinetic calibration method using the protonation reaction of optically pH-sensitive probes presents a problem: it is well known, that, no matter how small the concentration of acid (protons) in solution is, the protonation reaction of an optical pH probe (homogeneous phase reaction) is extremely fast (milli- or microseconds). Therefore, it is impossible, at an experimental level, to establish a useful relationship between the total concentration of acid in solution and the change in the optical properties (fluorescence, absorbance, etc.) of the pH-sensitive probe, at a constant reaction time, since the experimental measurement times should be on the order of milli- or microseconds (these time ranges are impossible to manage in the development of simple and inexpensive analysis techniques).

To solve the previous problem and establish a useful reaction time at an experimental level (in the order of seconds), the present invention is based on the kinetic foundations of chemical reactions in a heterogeneous phase. In theory, due to the diffusion processes (in this case the protons, have to first diffuse from the liquid phase to the solid phase, so that the reaction can subsequently occur), the protonation reactions of pH-sensitive probes in the heterogeneous phase are very much slower than reactions in solution (homogeneous phase).

Based on these principles, we consider the protonation reaction of an optical pH-sensitive probe immobilized on a support, such as a porous membrane, a heterogeneous reaction in the solid phase. This reaction should be much slower than the protonation reaction in the homogeneous phase (the pH-sensitive probe alone dissolved in the medium). In the heterogeneous phase, the protonation reaction depends on the following experimental variables: i) Acid concentration in the solution (proportional to the concentration of free hydronium ions: $H_3O^+$), ii) Reaction time, iii) Physicochemical properties of the support used for the immobilization (type of material, polarity, porosity, thickness, etc.), iv) Temperature. Therefore, by fixing the variables ii), iii), and iv), the slowing down of the protonation reaction of the pH-sensitive probe immobilized on the support allows experimentally establish a useful relationship (in terms of reaction time) between the total concentration of acid and the change in the optical properties (fluorescence, absorbance, reflectance, etc.) of the immobilized pH-sensitive probe.

The present invention provides an optically pH-sensitive material, such that by setting a constant reaction time, it is possible to experimentally establish a relationship (calibration curve) between the total concentration of acid in a solution (concentration of protons) and the intensity of an optical property of the optically pH-sensitive material.

A first object of the invention is an optical kinetic method for TA or VA measurement, of a liquid sample, which comprises:

- a) carrying out a kinetic calibration of an optically pH-sensitive material
- b) contacting a sample with the optically pH-sensitive material,
- c) measuring a change in an optical property of the optically pH-sensitive material produced by a reaction in heterogenous phase between the free hydronium ions ($H_3O^+$) of the sample and the optically pH-sensitive material, during a constant reaction time,
- d) detecting a signal corresponding to the change in the optical property.

Step a) is carried out by measuring the intensity of an optical property of an optically pH-sensitive material vs. acid concentration and obtaining a calibration curve.

"Reaction in heterogenous phase" means reactions in which the reactants are components of two or more phases (solid and gas, solid and liquid, two immiscible liquids) or in which one or more reactants undergo chemical change at an interface, e.g., on the surface of a solid catalyst.

The optically pH-sensitive material can be a solid support selected among porous or non-porous organic, inorganic or hybrid (organic-inorganic), based materials.

The optically pH-sensitive material can be an organic, inorganic or hybrid (organic-inorganic) material.

The optically pH-sensitive material can be zero-dimensional (0D: 0D means the group of materials that have all three dimensions less than 100 nm), one-dimensional (1D: 1D means the group of materials that have two dimensions less than 100 nm and one dimension higher than 100 nm), two-dimensional (2D: 2D means the group of materials that have one dimension less than 100 nm and two dimensions higher than 100 nm) or three-dimensional (3D: means the group of materials that have all three dimensions higher than 100 nm). Therefore, optically pH-sensitive material can be shaped as membranes, nanoparticles, microparticles, fibers and others.

The optically pH-sensitive material of the invention is able to respond by means of a change in any of its optical properties to small changes in the acidity of the medium (on the order of hundredths of a pH unit), with a maximum optical response for a reaction time in the order of seconds.

The optical property of the optically pH-sensitive material can be selected among transmittance, reflectance, luminescence (with its many modes: intensity or polarization, decay time, energy transfer, and quenching efficiency), infrared and Raman spectroscopies, interferometry and surface plasmon resonance.

The optically pH-sensitive materials of the invention can be selected from two categories: (I) organic, inorganic or hybrid (organic/inorganic) materials that intrinsically possess (without the need for any functionalization) the ability to respond optically (change in one or more of its optical properties) to very small changes in the acidity of the medium (on the order of hundredths of a pH unit), (II) Organic, inorganic or hybrid materials that do not naturally respond optically to changes in the acidity of the medium (solid supports), functionalized with an optically pH-sensitive probe.

An heterogenous reaction takes place according to the method of the invention, in both cases, type (I) and type (II) optically pH-sensitive materials. A type (I) material, is made up of a component or components that have the capability of naturally changing an optical property as a function of acid concentration. As an example, a natural biopolymer such as alginate can respond optically to pH changes, since its swelling capacity undergoes changes with the pH, and therefore its refraction index changes. Therefore, a type (I) material can be a membrane or any other material (0D, 1D, 2D o 3D), directly manufactured with alginate.

Examples of type (I), optically pH-sensitive materials, are: chitosan, alginate, carboxymethylcellulose, carbon dots, quantum dots, metal colloids, and hybrid materials such as mixtures of the previous ones.

On the other hand, a type (II) optically pH-sensitive material can be a 0D, 1D, 2D, 3D material that by itself does not have the natural ability to change its optical properties depending on changes in the pH of the medium (such as a cellulose paper), but if it is functionalized with an optical probe (like the Nile blue), it acquires this capacity.

Both optically pH-sensitive materials (type I and II) are water insoluble solids, wherein the protonation reaction is a heterogeneous one.

In the case of optically pH-sensitive materials type (II), the functionalization with optically pH-sensitive probes can take place through covalent interactions, electrostatic interactions, trapping, hydrophobic interactions, and encapsulation.

According to a preferred embodiment, the solid support is a cellulose membrane, which is functionalized with an optical probe that changes its optical properties with the pH, such as Nile blue.

The optically pH-sensitive organic-based materials of types (I) or (II) can be or can comprise one or more of the following polymers or copolymers: celluloses, nylon, polyacrylonitriles, polyimides, methacrylates, acrylates, polystyrenes, polyacrylamides, polycarbonates, polyethylenes, polyacetylenes, polypropylenes, tetrafluoroethylenes, polytetrafluoroethylenes, polyurethanes, polysulfones, polythiophenes, polyanilines, polypyrroles, polybenzimidazoles, polyketones, chitosan, alginate, DNA, and proteins.

The optically pH-sensitive inorganic-based materials of types (I) and (II) can be or can comprise one or more of the following raw materials, such as: glass, aluminium oxide, silicon dioxide, zirconium oxide, zeolites, carbon, cordierite, silicon carbide, silicon nitride, mullite, bentonite, zeolite, aluminium oxide, tin oxide, silicon carbide, iron oxide, zinc oxide, silicon, zirconium, copper, gold, silver, titanium, and iron.

Optically pH-sensitive hybrid-based materials of types (I) and (II) include those made from a mixture of organic and inorganic materials such as Metal Organic Framework (MOF), composite materials based on inorganic micro or nanoparticles dispersed in organic polymers or vice versa.

The manufacture of optically pH-sensitive materials of types (I) or (II) can be carried out by using one or more of the materials mentioned in the preceding paragraphs.

According to particular embodiments, optically pH-sensitive probes for the manufacture of optically pH-sensitive materials of type (II) are selected from:

- (i) organic probes, such as Nile Blue, Nile Red, Rose Bengal, Brilliant Red, Brilliant Blue, Brilliant Yellow, phthalocyanines derivatives, porphyrins derivatives, fluoresceines derivatives, rhodamines derivatives, cumarines derivatives, eosines derivatives, cyanines derivatives, acridines derivatives, dansyl-based fluorescent molecules, ruthenium and platinum organometallic complexes,
- (ii) biological probes, such as: protein-based optical probes, DNA-based optical probes, and cells-based optical probes.
- (iii) inorganic probes, such as: inorganic particles, for example, metallic particles such as Au, Ag, metal oxide particles, metal colloids, carbon nanotubes, graphene, carbon dots, and quantum dots,
- (iv) hybrid probes (organic/inorganic/biological), such as: ruthenium or platinum or palladium or copper or silver or iron, or zinc organometallic complexes, carbon dots, metallic colloid or quantum dots functionalized with DNA-based optical probes, carbon dots, metallic colloid or quantum dots functionalized with organic probes, carbon dots or quantum dots functionalized with protein-based optical probes, DNA-based optical probes functionalized with organic probes, and protein-based optical probes functionalized with organic probes.

The sample can be any type of liquid sample, such as vinegar, wine, juice, water.

The optical property can be selected among transmittance, reflectance, luminescence (with its many modes:

intensity or polarization, decay time, energy transfer, and quenching efficiency), infrared and Raman spectroscopies, interferometry and surface plasmon resonance.

The total acidity (TA) and the volatile acidity (VA) are measured in the same way: by contact of the optically pH-sensitive material with the liquid sample, regardless of the type of sample. For example, in wine the total acidity TA can be measured according to a particular embodiment, by introducing a membrane -as the optically pH-sensitive material- directly into the wine, then its fluorescence is measured, and the result is extrapolated by means of a calibration curve previously prepared with tartaric acid (tartaric acid, because in wine it is the major acid)). In the case of volatile acidity, only volatile acids are measured, so first the liquid sample, for example, wine, must be distilled (this is common to all methods for volatile acidity), a specific amount of wine is distilled - such as 50 ml - and 40 ml of distillate are collected (the distillate is now the sample). After this distillation step, the volatile acidity is measured exactly the same way as the total acidity. The calibration step previous to the measuring of the change in the optical property is made in case of the volatile acidity with the appropriate acid, for example, acetic acid, since this is the majority acid in the distillate. According to this particular embodiment a membrane as optically pH-sensitive material is introduced in the distillate. Then its fluorescence is measured, and the result is extrapolated by means of a calibration curve previously prepared with acetic acid.

The invention has as a second object an optical portable device for carrying out the method previously defined, for the quantification of the total or volatile acidity in a sample.

The optical portable device, comprises:

- an optical recognition element based on an optically pH-sensitive material type (I) or (II),
- an optical signal transducer element capable of measuring an optical property of the optically pH-sensitive material, capable of transforming the optical signal into an electrical signal and capable of amplifying the signal,
- optionally, a multi-sample distillation system for volatile acidity measurements, for which samples must be distilled,
- a calibration software.

The optical signal transducer element can be for example, an spectrometer, a photodiode array detector, a single photodiode detector, a photomultiplier tube, a colorimeter device.

The optical portable device, according to particular embodiments, comprises:

- an optical recognition element based on an optically pH-sensitive material type (I) or (II),
- an optical signal transducer element, that comprises a component, such as an optical fiber, connected to a device for measuring an optical property of the optically pH-sensitive material, the optical transducer is capable of transforming the optical signal into an electrical signal and its amplification,
- optionally, a multi-sample distillation system for sample volumes between 4 and 10 ml for volatile acidity measurements, for which samples must be distilled,
- a calibration software, capable of carrying out the quantification of the total or volatile acidity in a sample.

An optical signal transducer element can comprise a component, such as an optical fiber, connected to a device (spectrometer, photodiode array detector, single photodiode detector, photomultiplier tube, colorimeter device) for measuring an optical property of the optically pH-sensitive material, the optical transducer is capable of transforming the optical signal into an electrical signal and its amplification.

The device for measuring an optical property can be, for example, an spectrometer, a photodiode array detector, a single photodiode detector, a photomultiplier tube, a colorimeter device.

The optical signal transducer element can comprise an optical fiber, which can be simple or bifurcated, connected to a device for measuring an optical property of the optically pH-sensitive material, but the optical fiber can be replaced with a different element.

The optical fiber can be simple or bifurcated, depending on the type of measurement to be made.

According to particular embodiments, the optical signal transducer element comprises, depending on the optical property to be measured, a bifurcated optical fiber connected to a portable spectrometer for fluorescence or reflectance measurements, or a single optical fiber connected to a portable spectrophotometer for absorbance or infrared measurements, or a bifurcated optical fiber connected to a photodiode or photodiode array or photomultiplier tube for luminescent measurements, or a single optical fiber connected to a photodiode for absorbance measurements, or a portable colorimetric device.

The spectrometer is a commercially available device, that can register any type of spectra (fluorescence, absorbance, reflectance etc) between 100 nm and 1000 nm.

The multi-sample distillation system can be appropriate for sample volumes between 4 and 10 ml (this is only used for volatile acidity measurements, for which samples must be distilled.

The portable device of the inventio, according to particular embodiments, further comprises:

- an optical fiber connected to a portable high-resolution spectrometer and
- an interface.

The invention also has as an object an apparatus comprising the portable optical device previously defined.

In comparison with titration and enzymatic methods - the proposed invention offers several important advantages such as 1) It is a simple method in which the measurements are performed by introducing the optical recognition element directly into the sample, 2) It is fast, the sensor response is obtained in 15 s, 3) It is environmentally friendly as it does not require additional reagents: titration methods generate corrosive and toxic sodium hydroxide solutions containing disposable pH dyes, and enzymatic methods require expensive and extremely unstable reagents (enzymes) , 4) It is cost-effective, the optical recognition element (Paper-FM) developed in this invention is reversible, reusable and, extremely stable (a membrane of 0.9 mm diameter can be used to carry out at least 50 consecutive measurements), 5) It is portable and could be easily implemented in a miniaturized optoelectronic device, 6) Total or volatile acidity measurements are not affected by the presence of acidic gases in the samples such as carbon dioxide (carbonic acid); or sulphur dioxide (sulphurous acid).

**References:**

[1] M. D. Marazuela, M. C. Moreno-Bondi, Fiber-optic biosensors - an overview. Anal Bioanal Chem, 372, 664-682 (2002), https://doi.org/10.1007/s00216-002-1235-9

[2] O. S. Wolfbeis, Materials for fluorescence-based optical chemical sensors, J. Mater. Chem, 15 (2005) 2657-2669, https://doi.org/10.1039/B501536G

[3] O. S. Wolfbeis, Fiber-optic chemical sensors and biosensors Anal. Chem, 80 (2008) 4269-4283, https://doi.org/10.1021/ac060490z

[4] X. Dong Wang, O. S. Wolfbeis, Fiber-Optic Chemical Sensors and Biosensors (2008-2012), Anal.Chem, 85, (2013), 487-508, https://doi.org/10.1021/ac303159b

[5] X. Dong Wang, O. S. Wolfbeis, Fiber-Optic Chemical Sensors and Biosensors (2008-2012), Anal.Chem, 85, (2013), 487-508, https://doi.org/10.1021/ac303159b

[6] C. Jesus, S. F. O. Silva, M. Castanheira, G. Gonzalez Aguilar, O. Frazo, P.A.S. Jorge, J.M. Baptista, Measurement of acetic acid using a fiber Bragg grating interferometer, Meas. Sci. Technol, 20 (2009) 125201, https://iopscience.iop.org/article/10.1088/0957-0233/20/12/125201

[7] A. L. Medina-Castillo, L. Ruzic, B. Nidetzky, Juan M. Bolivar, Hydrophilic Nonwoven Nanofiber Membranes as Nanostructured Supports for Enzyme Immobilization, ACS Appl. Polym. Mater., 4, (2022), 6054-6066, https://doi.org/10.1021/acsapm.2c00863

[8] M.D. Fernández-Ramos, M. Bastida-Armesto, R. Blanc-Garcia, L. F. Capitán-Vallvey, A. L. Medina-Castillo. Design of colourimetric nanostructured sensor phases for simple and fast quantification of low concentrations of acid vapors, Microchim Acta, 190, (2023), 160, https://doi.org/10.1007/s00604-023-05723-0.

[9] A. L. Medina-Castillo, J. F. Fernandez-Sanchez, A. Segura-Carretero, A. Fernandez-Gutierrez, Design and synthesis by ATRP of novel, water-insoluble, lineal copolymers and their application in the development of fluorescent and pH-sensing nanofibres made by electrospinning, J. Mater. Chem., 21, (2011), 6742, https://doi.org/10.1039/C1JM10209E.

**BRIEF DESCRIPTION OF DRAWINGS**

**Figure 1:** shows an example of the preparation of an optically pH-sensitive material type (II), namely the synthesis of Paper-FM: Activation of the hydroxyl groups of the paper with vinyl sulfone groups (1), covalent immobilization of NB by Michael reaction between the vinyl sulfone groups of activated membrane and the amine groups of NB (2).

**Figure 2:** Measurement set-up showing the homemade interface formed by three plastic pieces (indicated as 1, 2, and 3 in the figure) manufactured by 3D printing for the implementation of Paper-FM (indicated as 4 in the figure) in a portable optical device.

**Figure 3:** Optical characterization of Paper-FM: Fitting the data to equation 1, where experimental data are denoted with the symbol (o) and the theoretical plot is indicated with a grey dashed line (A), fluorescence emission spectra at different pH values of Paper-FM (B).

**Figure 4:** Protonation rate of Paper-FM versus the concentration of acetic acid (AA) expressed as % (w/v).

**Figure 5:** Schematic of the measurement procedure (A), Sensor response: $\Delta IF=Ref.IF_{max}-IF_x$ vs. AA (%) w/v of the standard solution for a constant reaction time of 15 s (B), and linear range (C).

**Figure 6:** Effect of temperature on the calibration curve.

**Figure 7:** Short-term repeatability of Paper-FM: 10 measures for four levels of AA (%) w/v: 0.10%, 0.13%, 0.15%, and 0.18%).

**Figure 8:** Shewhart control chart for checking the long-term stability of Paper-FM.

**Figure 9:** Comparison between TA calculated using the proposed fiber-optic sensor and those, obtained by titration.

**Figure 10**: Sensor response: $\Delta IF = Ref.IF_{max} - IF_x$ vs. tartaric acid concentration (g L$^{-1}$) of the standard solutions for a constant reaction time of 15 s, and linear ranges.

## EXAMPLES

### EXAMPLE 1

An example of the fabrication of an optically pH-sensitive material type (II) (Paper-FM) and its implementation into a portable optical device for measuring total and volatile acidity) in beverages was developed. For this purpose, we relied on the kinetic principles of heterogeneous solid-phase reactions (slow reactions due to diffusion processes) to carry out a kinetics calibration of (Paper-FM) for the quantification of TA. In this example of the calibration step of the method of the invention, a linear relationship between the concentration of acid and the protonation rate of Paper-FM is established. Paper-FM was synthesized by the covalent immobilization of the optically pH-sensitive probe Nile Blue on a porous paper membrane. In addition, a 3D-printed interface was designed to implement Paper-FM into an optical portable device.

### 2. PREPARATION

#### 2.1. Chemicals and Materials

Divinyl sulfone (DVS), ethylene diamine (TEA), Nile blue chloride (NB), methanol (MeOH), glacial acetic acid (AA), sodium carbonate (SC), citric acid (CA), potassium dihydrogen phosphate (PDP), tris(hydroxymethyl)aminomethane (TRIS), potassium chloride (KCI), sodium tetraborate decahydrate (STBDH), sodium hydroxide (NaOH), and hydrochloric acid (HCI) were purchased from Sigma-Aldrich, cellulose filter paper (ref. 13058: 73 gm-2 and 170 $\mu$m thickness) from FILTER·LAB® (Barcelona, Spain), and decolorizing-carbon (Cod. 434507) from Grupo Montedison CARLO ERBA (Divisione Chimica/Milano/Italia). Throughout the experiment, all aqueous solutions were prepared using reverse osmosis-type quality water (Milli-RO 12 plus Milli-Q station from Millipore, conductivity 18.2 $\mu\Omega$·cm).

#### 2.2. Synthesis of Paper-FM (fluorescence membrane)

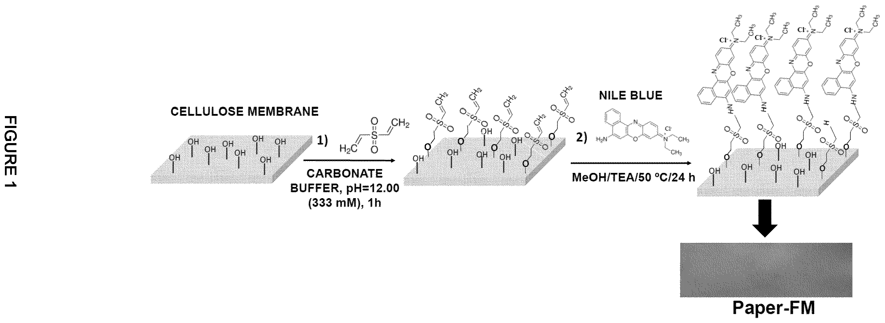

Paper-FM was prepared by functionalizing porous filter paper (FILTER·LAB 1305) with the pH optically sensitive probe Nile Blue (NB). Functionalization was carried out in two steps [7, 8] (see Fig. 1): 1) Activation of the hydroxyl groups of the paper with vinyl sulfone groups, 2) Covalent immobilization of NB by Michael reaction between the vinyl sulfone groups of the activated membrane and the amine groups of NB.

#### 2.3. Equipment and measurement protocol

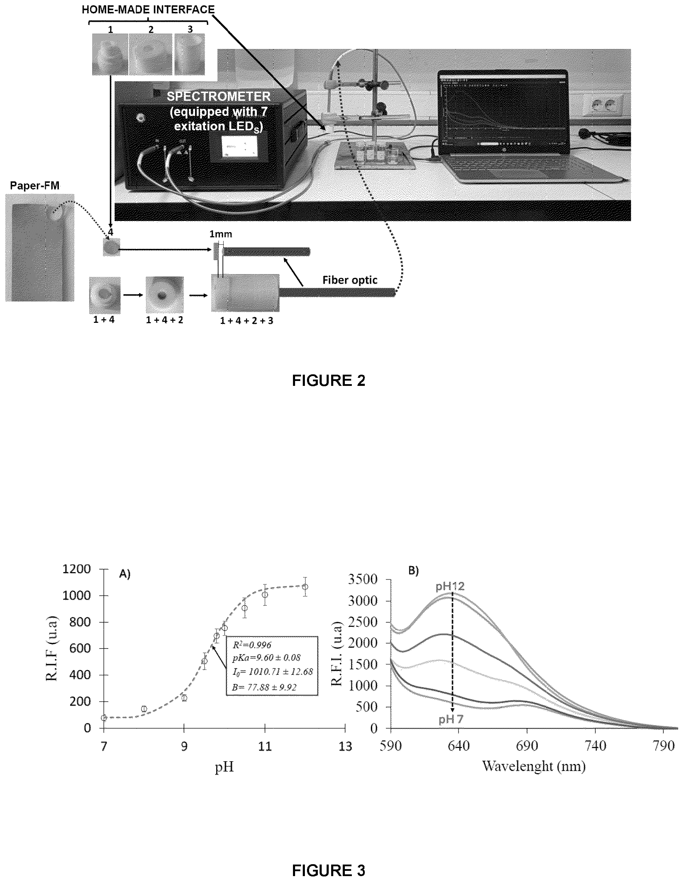

The fiber optic setup used in this work to conduct the fluorescence measurements is based on a 0.5 mm diameter optical fiber (from Ocean Insight) connected to a portable high-resolution spectrometer (measurement range: 100 nm to 1000 nm) equipped with seven excitation LED sources with central wavelengths of: 310 nm (power: 11.5 $\mu$W), 365 nm(power: 645.9 $\mu$W), 405 nm (Power: 991.6 $\mu$W), 457 nm (Power: 1071.9 $\mu$W), 523 nm (Power: 331.9 $\mu$W), 590 nm (Power: 86.8 $\mu$W), and 660 nm (Power: 568.1 $\mu$W) from Spyroistech company (Calle Tajonar 22, Edificio Jer6nimo de Ayanz. 31006 Pamplona, Navarra, Spain). To reproducibly fit a circular piece 0.9 mm diameter of Paper-FM at a distance of 1 mm the optical fiber, an interface based on three assembled components was designed and fabricated (by 3D printing) (see Fig. 2).

The excitation and emission wavelengths used for Paper-FM were $\lambda$exc = 523 nm and $\lambda$em = 630 nm, respectively.

Measurement protocol:

I) Preparation of standard solutions of acetic acid. Four stock solutions of acetic acid in purified water (AA (%) w/v: 4%, 5%, 6%, and 7% w/v) were prepared, and subsequently, the standard solutions were prepared by diluting 40 times (1/39, stock solution/distilled water, v/v) the stock solutions,

II) Preparation of universal buffer pH=11, 0.05 M. Tris (3.02 g), citric acid (5.25g), sodium tetraborate decahydrate (9.53g), potassium dihydrogen phosphate (3.54g), and potassium chloride (1.86 g) were dissolved in 500 mL of water, and then the pH was adjusted to 11 using a solution of NaOH.

III) Procedure for obtaining the calibration curve. Paper-FM (8x2.53cm) was cut into circles of 0.9 mm diameter. The reference state of maximum fluorescence emission (Ref.IFmax) of Paper-FM was established by introducing the membrane in universal buffer pH 11, 0.05 M for 1 min. Therefore, the calibration curve was carried out as follows: a 0.9 mm diameter circle of Paper-FM was immersed in universal buffer pH 11, 0.05 M for 1 min, and then the $Ref.IF_{max}$ value was measured using the set-up shown in Fig.2. Next, the membrane was introduced into the corresponding standard solution of acetic acid for 15 s, and its fluorescence ($IF_x$; x= AA (%) w/v of the standard solution) was also measured with the set-up of Fig.2. The measurement cycle: universal buffer pH 11 (1min) ↔ AA standard solution (15 s) was repeated with all the acetic acid standard solutions. Subsequently, the calibration curve was obtained by representing the sensor response ($\Delta IF = Ref.IF_{max}-IF_x$) versus AA (%) w/v of the standard solution (x). Three replicates were measured for each concentration.

IV) Measurements of total acidity (TA) in vinegar samples. Seven different types of vinegar (apple cider vinegar, white wine vinegar, rice vinegar, cider vinegar, red wine vinegar, Sherry vinegar, and Modena vinegar) and three brands of each type were selected to evaluate the performance of the sensor. The TA measurements of vinegar samples were performed following the same procedure used for the calibration curve: Firstly, $Ref.IF_{max}$ was obtained by introducing a 0.9 mm diameter circle of Paper-FM into universal buffer pH 11, 0.05 M for 1 min. The membrane was then introduced into the diluted vinegar sample (1/39, vinegar/distilled water, v/v) for 15 s, and its fluorescence ($IFS_x$; $S_x$ = Sample x) was measured with the setup shown in Fig.2. The AT, expressed as AA (%) w/v, was obtained by extrapolating the sensor response ($\Delta IF = Ref.IF_{max}-IFS_x$) on the calibration curve. Three replicates of each sample were measured to evaluate the error (st/√n): where s is the standard deviation, t is the student-t at 95% probability and n-1 freedom degrees, and n is the number of replicas. Each membrane of 0.9 mm in diameter was used for 24 measurement cycles: 4 calibration points × 3 replicates per point and, 4 vinegar samples × 3 replicates per sample. The TA of the non-coloured samples (white wine, apple, rice, and cider vinegar) was measured by introducing the membrane directly into the sample for 15 s. However, in the case of coloured samples (red wine, Sherry, and Modena vinegar), colour significantly interferes with the TA measurement. The interference due to colour was eliminated by decolorizing the samples with activated carbon by the following protocol: The vinegar samples were diluted (1/39, vinegar/purified water, v/v), subsequently, 0.4 g of activated carbon was added to 20 ml of the diluted vinegar, and the sample was shaken for 10 min. Finally, the sample was filtered to remove the carbon. In the case of Sherry and Modena samples, the same protocol was carried out, but for the total decolorization process to occur in 10 min, it was necessary to increase the amount of carbon by 1.5 g for each 20 ml of diluted vinegar (1/39, vinegar/purified water, v/v).

## EXAMPLE 2

To validate the kinetic calibration method of an optically pH-sensitive material for the quantification of TA and VA in real samples of the invention, first, we focussed on the design of an optically pH-sensitive material type (II) (Paper-FM) with the above-mentioned characteristics according to example 1 (pKa ≥ 9). For this, the optically pH-sensitive probe Nile Blue (organic probe) was covalently immobilized on a porous paper membrane using the following two-step protocol (see Fig.1: 1) Activation of the hydroxyl groups of paper with vinyl sulfone groups. A piece of the paper (8×2.3 cm) was introduced into 40 mL of a solution of divinyl sulfone (0.33M) in sodium carbonate buffer (333 mM) at pH=12.00 for 1h. Subsequently, the membranes were washed three times with purified water for 15 min and dried at 50°C in a vacuum oven, 2) Covalent immobilization of NB. Vinyl sulfone groups can easily react with the amine group by a Michael-type reaction. Thus, to functionalize the membranes with the pH-probe NB, a piece of paper (8×2.3cm) previously activated with vinyl sulfone groups was introduced into 40 mL of a solution of 100 mg $L^{-1}$ of NB in methanol. Then 2 mL of triethylamine was added, and the immobilization reaction was carried out at 50°C under shaking (roller) for 24 h. Subsequently, the membrane was washed with methanol under sonication until the presence of NB was not detected in the supernatant (the presence of NB in the supernatant was analyzed by measuring the fluorescent emission at 630 nm). Finally, the membrane was dried at 50 °C in a vacuum oven. Then, the characterization of Paper FM was carried out by introducing the membrane (0.9 mm diameter circle) into universal buffer solutions at different pH values: 7, 8, 9, 9.5, 9.8, 10, 10.5, 11, and 12. Subsequently, the fluorescence spectra were measured using the setup shown in Fig. 2, and the data were fitted using the following equation [9]:

$$I = \frac{I_0}{1 + \left(10^{pH-pK_a}\right)^{-1}} + B$$

where I is the fluorescence at each pH value, $I_0$ is the fluorescence intensity of the basic form, and B is the fluorescence intensity of the acid form. Fig.3 shows the results of the optical characterization of Paper-FM.

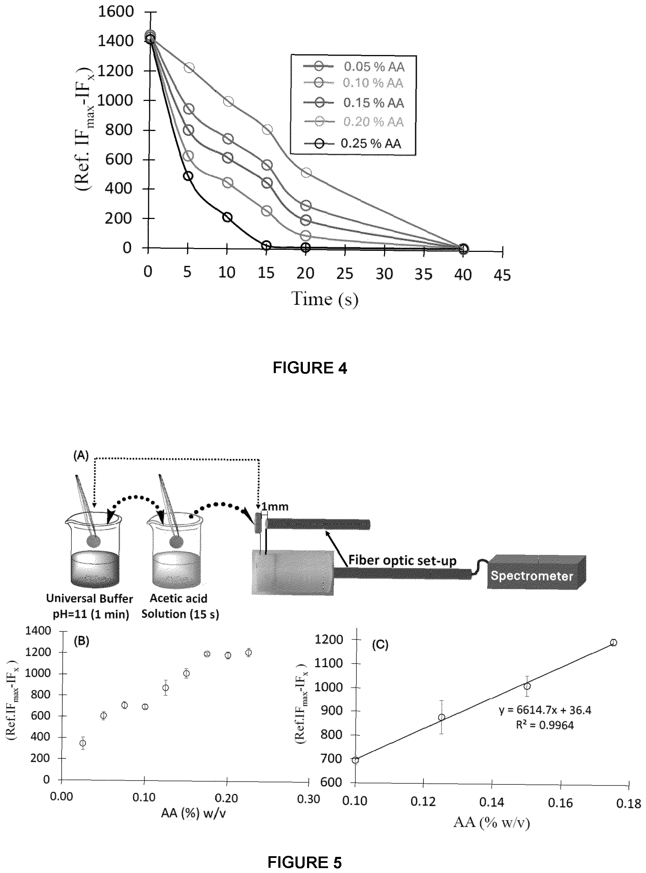

As deduced from the results reported in Fig. 3, Paper-FM has an apparent pKa of $9.60 \pm 0.08$, which is ideal for developing a calibration method. Subsequently, the relationship between luminescence (fluorescence in this case) quenching of the membrane and acetic acid concentration for a fixed reaction time of 15 s was studied according with point 3 of the measurement protocol described above. For this purpose, stock solutions with different AA (%) w/v were prepared (2%, 4%, 6%, 8%, and 10%). On the other hand, Paper-FM was cut into circles of 0.9 mm diameter, and the fluorescent intensity at pH=11 was selected as the maximum reference fluorescence value (Ref.IF$_{max}$). To set the Ref.IF$_{max}$ value, the membrane was introduced in 10 mL of universal buffer pH 11, 0.05 M for 1 min, and then its fluorescence was measured using the setup shown in Fig. 2. Then, the membrane was introduced into the acetic acid stock solutions for 15 s, and its fluorescence (IF$_x$) was also measured with the set-up shown in Fig. 2. To determines the optimal concentration range of acetic acid, stock solutions were progressively diluted, and the sensor began to respond when the stock solutions were diluted 40 times (1/39, acetic acid stock solution /distilled water, v/v). Fig. 4 shows the sensor response ($\Delta$IF= Ref.IF$_{max}$-IF$_x$) versus the concentration of AA (%) w/v after dilution: 0.05%, 0.10%, 0.15%, 0.20%, and 0.25%.

The experimental results reported in Fig. 4 agree well with the proposed hypothesis: by selecting a constant reaction time within the interval [10s-40s] a relationship (calibration curve) between the concentration of acetic acid in solution and the luminescence quenching of Paper-FM can be established. The calibration curve was represented according with the point 3 of the measurement protocol described above stock solutions of acetic acid with the following concentrations (AA (%) w/v): 1%, 2%, 3%, 4%, %5, 6%, 7%, 8%, and 9%, were prepared, and subsequently, they were diluted 40 times with purified water (1/39, AA stock solution/purified water, v/v) to obtain the following standard solutions: 0.03%, 0.05%, 0.08%, 0.10%, 0.13%, 0.15%, 0.18%, 0.20%, and 0.23%. Then, the sensor response ($\Delta$IF= Ref.IF$_{max}$-IF$_x$) was measured for all standard solutions, and the calibration curve was obtained by representing $\Delta$IF= Ref.IF$_{max}$-I F$_x$ versus AA (%) w/v. Fig. 5 shows a schematic of the measurement procedure and the calibration curve.

in Fig. 5A, the response of the sensor versus the concentration of AA corresponds to a type of sigmoidal curve in which two linear ranges are observed, one at low concentrations (% w/v) of AA [0.03%-0.08%] and, the other at higher concentrations [0.1%-0.18%].

The experimental data presented in Figs. 4 and 5 validated the calibration method based on the relationship between acid concentration in solution and quenching of the luminescence of a conventional pH-sensitive fluorescent membrane with a basic pKa. Either of the two linear ranges in Fig. 5 could be used for the calculation of TA (expressed as AA (%) w/v), we have chosen the higher linear range (0.1%-0.18%) (see Fig. 5C) simply because of its greater amplitude, and because it is closer to the TA of the vinegar, thus requiring less dilution of the samples. The linear range (0.1%-0.18%) has a good correlation coefficient ($R^2$= 0.996) with detection and quantification limits of 0.0024 and 0.0083%, respectively. The detection and quantification limits were determined using the IUPAC method (LOD = $3_{Sb}$/m; LOQ=10 $_{Sb}$ /m). The standard deviation of the blank (Sb) was obtained by measuring (10 measurements) the response of the sensor for a pH=11, 0.05 M universal buffer solution.

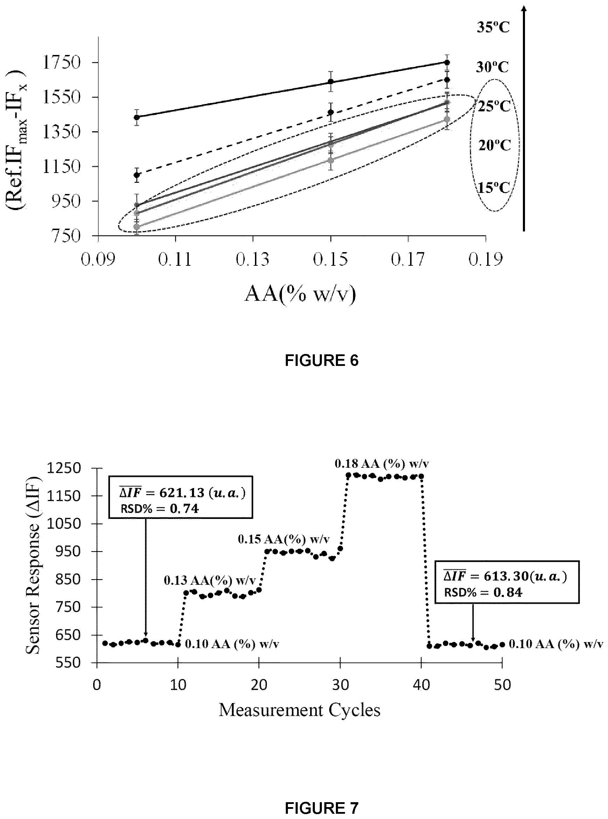

Considering that the proposed calibration method is based on the kinetics of the protonation reaction of immobilized pH-probe, the rate constants and diffusion coefficients of this reaction can be affected by temperature. Therefore, to check the influence of temperature, the calibration was carried out at different temperatures (15°C, 20°C, 25°C, 30°C, and 35°C). As shown in Fig. 6 between 15°C and 25°C calibration is not affected by temperature, however, as expected, above 25°C the rate of the protonation reaction increases considerably, and although good linearity is still maintained, the slope of the calibration begins to decrease (decrease in sensitivity). Even so, the sensitivity of the calibration at 35°C (black line of fig. 6) is still quite good, with a detection limit (0.004 AA% w/v) and quantification limit (0.013% AA w/v) well below the TA values in the vinegar samples (TA in vinegar is between 5% AA w/v and 8% AA w/v).

3.2. Stability of Paper-FM

To analyse the stability and reusability of the Paper-FM, short-term precision (repeatability) and long-term precision (reproducibility) were studied. For short-term precision, the sensor response ($\Delta$IF= Ref.IF$_{max}$-IF$_x$) was measured for four concentration levels: AA (%) w/v: 0.10%, 0.13%, 0.15%, and 0.18% (10 measurements were performed for each concentration), and all the measurements (50) were performed consecutively in less than 2 h using a single membrane of 0.9 mm diameter. As can be seen in Fig. 7, Paper-FM is extremely stable: each membrane of 0.9 mm diameter can be used to perform at least 50 measurements.

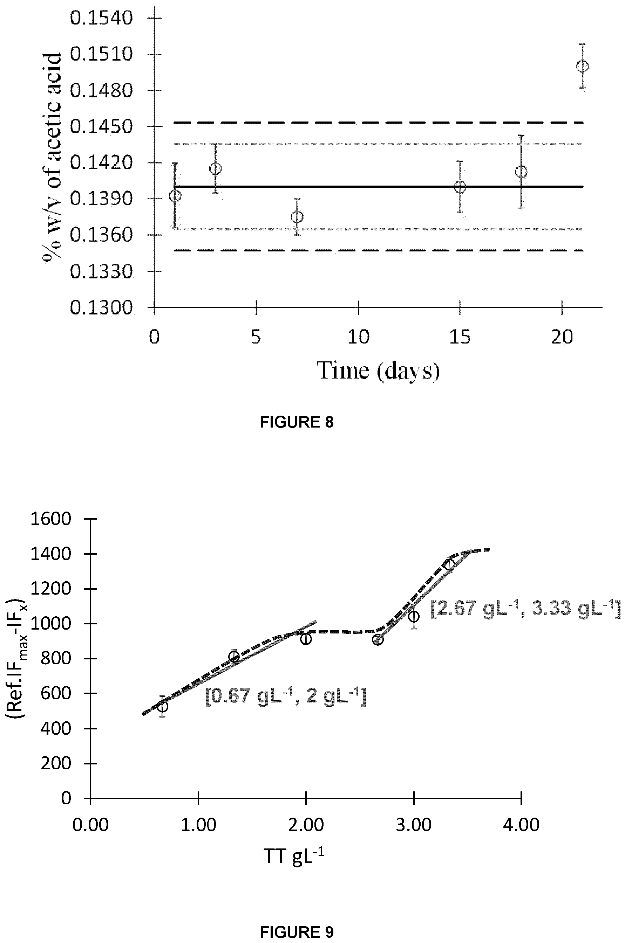

(Fig. 7) The long-term stability was studied by measuring the sensor response for a single concentration level (0.14 AA (%) w/v) for 18 days (after each measurement, the membrane was dried at room temperature (RT) and stored in the absence of light). All measurements were performed using the same 0.9 mm diameter membrane. The results were interpreted using a Shewhart diagram (Long-term stability was defined as the signal that remains within the control lines on the Shewhart chart). As shown in Fig. 8, after 18 days, the response of the membrane remained within the established control limits, showing excellent long-term stability.

The results reported in Figs. 7 and 8 show extraordinary stability and reusability of Paper-FM: a single 0.9 mm diameter membrane can be used to perform more than 50 consecutive measurements, and can also be stored and reused for at least 18 days (although after 18 days the limits set in the Shewhart control chart are exceeded, the membrane is still responsive, and thus it could be recalibrated and used further). Therefore, with commercial use in mind, Paper-FM is extremely efficient and cost-effective.

3.3. Real-world application and validation

To evaluate the efficiency in the analysis of real samples, the total acidity (TA) of 21 samples of vinegar and the total and volatile acidity of 7 samples of wine of different origins were analysed by both the method proposed in this invention and the reference methods (titration method was used for TA of vinegar samples and for wines samples titration method and enzymatic method were used for total and volatile acidity respectively).). Considering that the majority acid in wine is tartaric acid, to calculate the total acidity in the wine samples, a calibration using tartaric acid (see Fig. 9) was previously established (the calibration was carried out following the same protocol as that described above for acetic acid), and the total acidity was expressed as g $L^{-1}$ of tartaric acid. The total acidity of the samples was measured by introducing the Paper-FM directly into the sample (vinegar and wine) for 15 s, and then measuring its fluorescence. In the case of coloured samples (red wine, Sherry, and Modena vinegar), colour significantly interferes with the TA measurement. The interference due to colour was eliminated by decolorizing the samples with activated carbon using the protocol described above.

For the measurements of volatile acidity of wine samples, in a first step volatile acids were extracted by distillation: 50 mL of wine were taken and distilled until 40 mL of distillate was collected. Then, volatile acidity was measured by introducing Paper-FM directly into the distillate for 15 s, and measuring its fluorescence with the setup of Fig, 2. Each membrane of 0.9 mm in diameter was used for 24 measurements (four points for the calibration curve and three vinegar samples: three replicates for each measure). Table 1 summarizes the results of TA (expressed as % w/v of acetic acid) of vinegar samples given by the manufacturer, obtained with the optical technology of this invention, and those obtained by the official reference method (titration: AS-313-01-ACITOT), and Table 2 summarizes the results of total acidity (TA: expressed as g $L^{-1}$ of tartaric acid) and volatile acidity (VA: TA: expressed as g $L^{-1}$ of acetic acid) of wine samples obtained with the technology of this invention, and those obtained by the official reference methods (titration and enzymatic methods)

**Table 1:** Results of TA of vinegar samples by manufacturer, the optical technology of this invention and the official reference method (titration).

| Type of vinegar | Brand | TA indicated by the manufacturer (% w/v of acetic acid) | TA with the optical technology of this invention (% w/v of acetic acid) | TA with the official reference method (% w/v of acetic acid) |
|---|---|---|---|---|
| **Apple** | Hacendado | 5 | 4.94±0.17 | 4.80±0.15 |
| | Consum | 5 | 5.05±0.05 | 4.95±0.03 |
| | Kania | 5 | 4.78±0.05 | 4.68±0.16 |
| **White wine** | Hacendado | 6 | 5.92±0.14 | 6.04±0.43 |
| | Consum | 6 | 6.28±0.16 | 6.50±0.35 |
| | Kania | 6 | 5.75±0.14 | 5.60±0.20 |
| **Rice** | Blue Dragon | NSM* | 3.30±0.16 | 3.45±0.08 |
| | Tiger Khan | NSM* | 4.40±0.17 | 4.31±0.08 |
| | Lockcheng | NSM* | 4.41±0.03 | 4.53±0.14 |
| **Cider** | Corte Inglés | 5 | 4.56±0.24 | 4.66±0.20 |
| | Coviran | 5 | 4.17±0.04 | 4.20±0.22 |
| | Femua | 5 | 4.71±0.22 | 4.65±0.17 |

(continued)

| Type of vinegar | Brand | TA indicated by the manufacturer (% w/v of acetic acid) | TA with the optical technology of this invention (% w/v of acetic acid) | TA with the official reference method (% w/v of acetic acid) |
|---|---|---|---|---|
| Modena (PGI) | Hacendado | 6 | 5.38±0.22 | 5.41±0.02 |
| | Comsum | 6 | 5.42±0.19 | 5.51±0.27 |
| | Ferranini | 6 | 5.99±0.05 | 5.96±0.13 |
| Jerez (PDO) | Hacendado | 8 | 7.01±0.13 | 7.15±0.15 |
| | Comsum | 7 | 6.21±0.10 | 6.31±0.09 |
| | Corte Inglés | 7 | 6.34±0.20 | 6.36±0.31 |
| Red Wine | Consum | 6 | 5.54±0.16 | 5.41±0.28 |
| | Corte Inglés | 6 | 4.82±0.22 | 4.80±0.03 |
| | Rioja Corte Inglés | 6 | 5.60±0.09 | 5.54±0.18 |

Table 2: Results of TA and VA of wine samples by the optical technology of this invention, and the official reference method (titration). VA was calculated using the official reference methods: i) Titration methods: OIV-AS-313-01-ACITOT for total acidity and AS-313-02-ACIVOL (Vol.) for volatile acidity, ii) Enzymatic method: RESOLUCIÓN OIV-OENO 621-2019 (Enz) for volatile acidity.

| Type of wine | Brand | TA: with the optical technology of this invention (Tart. acid g L$^{-1}$) | TA: with the official reference method) (Tart. acid g L$^{-1}$) | VA: with the optical technology of this invention (Acet. acid g L$^{-1}$) | VA: with the official reference methods (Acet. acid g L$^{-1}$) |
|---|---|---|---|---|---|
| RED | Viña Albali crianza 2019 | 4.58 ± 0.02 | 4.44 ± 0.08 | 0.58 ± 0.03 | **Enz =** 0.49 ± 0.06 <br> **Vol. =** 0.55 ± 0.08 |
| | Arnum tinta de toro 2023 | 4.34 ± 0.16 | 4,39 ± 0.09 | 0.56 ± 0.04 | **Enz =** 0.46 ± 0.06 <br> **Vol. =** 0.50 ± 0.08 |
| | Viña Carpio Ribera del Duero 2022 | 4.57 ± 0.15 | 4.78 ± 0.13 | 0.45 ± 0.07 | **Enz =** 0.47 ± 0.06 <br> **Vol. =** 0.52 ± 0.08 |
| | DaVida Sin Sulfitos | 6.37 ± 0.10 | 6.19 ± 0.13 | 0.64 ± 0.04 | **Enz =** 0.65 ± 0.08 <br> **Vol. =** 0.68 ± 0.10 |
| WHITE | Casa de Luna Rueda Verdejo 2023 | 6.56 ± 0.30 | 6.82 ± 0.15 | 0.28 ± 0.06 | **Enz =** 0.22 ± 0.04 <br> **Vol. =** 0.26 ± 004 |
| | Beso de Luna Rioja 2023 | 6.50 ± 0.17 | 6.70 ± 0.18 | 0.35 ± 0.06 | **Enz =** 0.27 ± 0.04 <br> **Vol. =** 0.33 ± 0.05 |
| | Vino Fidencio La Mancha | 4.89 ± 0.11 | 4.99 ± 0.23 | 0.33 ± 0.03 | **Enz** < 0.10 ± 0.05 <br> **Vol.** < 0.20 ± 0.10 |

The results reported in Figs. 5, 6, 7, 8, 9, and Tables 1 and 2 demonstrate, that The proposed optical method allows simple, fast, cost-effective, and environmentally friendly quantification of total and volatile acidity in real samples.

EXAMPLE 3

**Sensor Validation**

The optical technology developed was tested by analyzing 21 vinegar samples and 7 wine samples of different origins according to example 2 above, and the results were successfully validated with the official reference method.

In the case of the analysis of TA of vinegar samples, the results using the optical technology of the invention, were validated by the official reference method (OIV-AS-313-01-ACITOT), which consists of direct titration with sodium hydroxide. The titration was carried out using a METTLER TOLEDO® Compact G20S according to the following protocol: Initially, the solution of NaOH was standardized with potassium hydrogen phthalate (KHP). For titration, the sample (2 mL of vinegar) was introduced into the sample cup, distilled water was added until the electrode was covered, and then titration was performed. The operation was repeated three times for each sample, and the volumes of NaOH spent were recorded and used for the calculation of total acidity, expressed as AA (%) w/v.

The validation of the results obtained for TA and VA in the wine samples with the optical technology developed in this invention, were validated using the official reference methods by the laboratory Dolmar (https://dolmarlaboratorio. com/) in La Rioja (laboratory authorized to carry out official analyses in the wine sector R.(EU)2018/273), and accredited by ENAC) using the official methods, titration methods: OIV-AS-313-01-ACITOT for total acidity and AS-313-02-ACIVOL for volatile acidity, and enzymatic method: RESOLUCION OIV-OENO 621-2019 (Enz) for volatile acidity.

The results show that the optical technology presented in the invention allows a direct, simple, and fast (15 s response time) quantification of TA and VA in beberages (vinegar and wine). It is environmentally friendly, because, unlike titration methods, it does not generate toxic waste, it is reversible, and is extremely stable (a 0.9 mm diameter circle of Paper-FM allows at least 50 consecutive measurements).

**Claims**

1. An optical kinetic method for the determination of the total or volatile acidity of a sample, which comprises:

   - a) carrying out a kinetic calibration of an optically pH-sensitive material
   - b) contacting a sample with the optically pH-sensitive material,
   - c) measuring a change in an optical property of the optically pH-sensitive material produced by a reaction in heterogenous phase between the free hydronium ions ($H_3O^+$) of the sample and the optically pH-sensitive material, during a constant reaction time,
   - d) detecting a signal corresponding to the change in the optical property.

2. The method according to claim 1, wherein the optically pH-sensitive material is a solid support selected among:

   - porous or non-porous organic, inorganic or hybrid organic-inorganic, based materials.

3. The method according to claim 1 or 2, wherein the optically pH-sensitive material is a solid support selected among:

   - zero-dimensional materials,
   - one-dimensional materials,
   - two-dimensional materials and
   - three-dimensional materials.

4. The method according to any of claims 1 to 3, wherein the optically pH-sensitive material is able to detect changes in the acidity of a medium on the order of hundredths of a pH unit, with a maximum optical response for a reaction time in the order of seconds.

5. Method according to any of claims 1 to 4 wherein the optically pH-sensitive material selected from:

   - type (I): organic, inorganic or hybrid (organic/inorganic) materials that intrinsically possess the ability to respond optically to changes in the acidity of the medium of the order of hundredths of a pH unit and
   - type (II) organic, inorganic or hybrid organic/inorganic materials that do not naturally respond optically to changes in the acidity of the medium, functionalized with an optically pH-sensitive probe.

6. The method according to claim 5, wherein the optically pH-sensitive material type (I) or (II) comprise.one or more of the following organic polymers or copolymers: celluloses, nylon, polyacrylonitriles, polyimides, methacrylates, acrylates, polystyrenes, polyacrylamides, polycarbonates, polyethylenes, polyacetylenes, polypropylenes, tetrafluoroethylenes, polytetrafluoroethylenes, polyurethanes, polysulfones, polythiophenes, polyanilines, polypyrroles, polybenzimidazoles, polyketones, chitosan, alginate, DNA, and proteins.

7. The method according to claim 5, wherein the optically pH-sensitive material of type (I) and (II) comprises one or more of the following raw inorganic materials: glass, aluminium oxide, silicon dioxide, zirconium oxide, zeolites, carbon, cordierite, silicon carbide, silicon nitride, mullite, bentonite, zeolite, tin oxide, silicon carbide, iron oxide, zinc oxide, silicon, zirconium, copper, titanium, gold, silver, and iron.

8. The method according to claim 5, wherein the optically pH-sensitive material of type (I) or (II) is a hybrid material selected from:

   - Metal Organic Framework (MOF),
   - composite materials based on inorganic micro or nanoparticles dispersed in organic polymers or vice versa.

9. The method according to any of claims 1 to 8, wherein the optically pH-sensitive probe is selected from:

   i) organic probes, preferably selected from Nile Blue, Nile Red, Rose Bengal, Brilliant Red, Brilliant Blue, Brilliant Yellow, phthalocyanines derivatives, porphyrins derivatives, fluoresceines derivatives, rhodamines derivatives, cumarines derivatives, eosines derivatives, cyanines derivatives, acridines derivatives, dansyl-based fluorescent molecules, ruthenium and platinum organometallic complexes,
   ii) biological probes, preferably selected from protein-based optical probes, DNA-based optical probes and cells-based optical probes.
   iii) inorganic materials, preferably selected from carbon dots, quantum dots, metallic particles, carbon nanotubes, graphene, metal oxide particles and metal colloids,
   and
   iv) hybrid optically pH-sensitive probes, preferably selected from:

      - organometallic complexes of ruthenium, or platinum, or copper or silver or iron, or zinc,
      - carbon dots, metallic colloid, or quantum dots functionalized with DNA-based optical probes, carbon dots, metallic colloid or quantum dots functionalized with organic probes,
      - carbon dots, metallic colloid or quantum dots, functionalized with protein-based optical probes,
      - DNA-based optical probes functionalized with organic probes, and
      - protein-based optical probes functionalized with organic probes.

10. The method according to any of the preceding claims 1 to 9, wherein the sample is a liquid sample, selected from vinegar, wine, juice and water.

11. Method according to any of the preceding claims 1 to 10, wherein the optical property is selected from transmittance, reflectance, luminescence infrared and Raman spectroscopies, interferometry and surface plasmon resonance.

12. An optical portable device carrying out the method defined in any of claims 1 to 11, for the quantification of the total or volatile acidity in a sample, comprises:

   - an optical recognition element based on an optically pH-sensitive material type (I) or (II),
   - an optical signal transducer element, that comprises a device for measuring an optical property of the optically pH-sensitive material type (I) or (II), the optical transducer is capable of transforming the optical signal into an electrical signal and its amplification,
   - optionally, a multi-sample distillation system for sample volumes for volatile acidity measurements, for which samples must be distilled, preferably for sample volumes between 4 and 10 ml, and
   - a calibration software, capable of carrying out the quantification of the total or volatile acidity in a sample.

13. The optical portable device, according to claim 12, wherein the device for measuring the optical property is selected among:

   - a spectrometer,
   - a single photodiode detector
   - a photodiode array
   - a photomultiplier tube and

- a portable colorimetric device.

**14.** The portable device according to any of claims 12 to 13, wherein

- the optically pH-sensitive material is a type (II) material wherein the optically pH-sensitive probe is selected among the probes mentioned in claims 9 or
- the solid support is a type (I) of type (II) material selected from among the ones mentioned in any of claims 5 to 8.

**15.** An apparatus comprising the portable optical device previously defined in any of claims 12 to 14.

FIGURE 1

FIGURE 2

FIGURE 3

FIGURE 4

FIGURE 5

FIGURE 6

FIGURE 7

FIGURE 8

FIGURE 9

Europäisches
Patentamt
European
Patent Office
Office européen
des brevets

# EUROPEAN SEARCH REPORT

**Application Number**

EP 24 38 2670

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/203168 A1 (TANZER DIETER [DE] ET AL) 14 October 2004 (2004-10-14) | 1-5,9-15 | INV. G01N21/80 |
| Y | * paragraphs [0001], [0012], [0019], [0035], [0053], [0058] * | 1-15 | G01N21/27 |
| | ----- | | |
| X | ASIJATI E ET AL: "Non-invasive Optical Chemical Sensor Based on Polyaniline Films for Detection of Ammonia and Acetic Acid Solutions", SENSORS AND THE INTERNATIONAL CONFERENCE ON NEW TECHNIQUES IN PHARMACE UTICAL AND BIOMEDICAL RESEARCH, 2005 ASIAN CONFERENCE ON KUALA LUMPUR, MALAYSIA 05-07 SEPT. 2005, PISCATAWAY, NJ, USA,IEEE, 5 September 2005 (2005-09-05), pages 111-114, XP010869255, DOI: 10.1109/ASENSE.2005.1564518 ISBN: 978-0-7803-9370-7 | 1-3,5,6, 9,12-15 | |
| Y | * abstract * * page 112 * * page 113, right-hand column * * figure 6 * | 1-15 | |
| | ----- | | **TECHNICAL FIELDS SEARCHED (IPC)** |
| | -/-- | | G01N |

The present search report has been drawn up for all claims

| Place of search | Date of completion of the search | Examiner |
|---|---|---|
| Munich | 2 December 2024 | D'Alessandro, Davide |

EPO FORM 1503 03.82 (P04C01)

Europäisches
Patentamt

European
Patent Office

Office européen
des brevets

# EUROPEAN SEARCH REPORT

**Application Number**

EP 24 38 2670

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LIU ZHIHONG ET AL: "Polymeric pH indicators immobilized PVA membranes for optical sensors of high basicity based on a kinetic process", ANALYTICA CHIMICA ACTA, vol. 519, no. 2, 1 August 2004 (2004-08-01), pages 147-153, XP093229558, AMSTERDAM, NL ISSN: 0003-2670, DOI: 10.1016/j.aca.2004.06.028 Retrieved from the Internet: URL:https://www.sciencedirect.com/science/article/pii/S0003267004007731?via%3Dihub> * abstract * * page 148, right-hand column, paragraph 5 * * page 151, left-hand column, last paragraph - right-hand column * | 1-15 | |
| Y | HORTVET JULIUS: "THE DETERMINATION OF TOTAL, FIXED AND VOLATILE ACIDS IN WINES.", THE JOURNAL OF INDUSTRIAL AND ENGINEERING CHEMISTRY., vol. 1, no. 1, 1909, pages 31-38, XP093229722, * page 31, left-hand column, last paragraph - page 32, left-hand column * * page 35 * | 12-15 | **TECHNICAL FIELDS SEARCHED (IPC)** |

-/--

The present search report has been drawn up for all claims

| Place of search | Date of completion of the search | Examiner |
|---|---|---|
| Munich | 2 December 2024 | D'Alessandro, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                     

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 38 2670

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BABINCEV LJILJANA M. ET AL: "Determination of the amount of volatile acids in oxidized wines and neutralization of these by using chemical reagents and biological materials", BIOMASS CONVERSION AND BIOREFINERY, vol. 13, no. 6, 30 January 2021 (2021-01-30), pages 4717-4725, XP093229717, Berlin/Heidelberg ISSN: 2190-6815, DOI: 10.1007/s13399-021-01339-7 Retrieved from the Internet: URL:https://link.springer.com/article/10.1 007/s13399-021-01339-7> * abstract * * page 4719, left-hand column * ----- | 12-15 | |

TECHNICAL FIELDS
SEARCHED      (IPC)

The present search report has been drawn up for all claims

| Place of search | Date of completion of the search | Examiner |
|---|---|---|
| Munich | 2 December 2024 | D'Alessandro, Davide |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 3 of 3

## ANNEX TO THE EUROPEAN SEARCH REPORT
## ON EUROPEAN PATENT APPLICATION NO.

EP 24 38 2670

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2024

| Patent document cited in search report | Publication date | Patent family member(s) | | Publication date |
|---|---|---|---|---|
| US 2004203168 A1 | 14-10-2004 | AT | E423310 T1 | 15-03-2009 |
| | | DE | 10148561 A1 | 10-04-2003 |
| | | EP | 1438576 A1 | 21-07-2004 |
| | | US | 2004203168 A1 | 14-10-2004 |
| | | WO | 03029810 A1 | 10-04-2003 |
| | | ZA | 200403241 B | 30-05-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. D. MARAZUELA** ; **M. C. MORENO-BONDI**. Fiber-optic biosensors - an overview. *Anal Bioanal Chem*, 2002, vol. 372, 664-682, https://doi.org/10.1007/s00216-002-1235-9
- **O. S. WOLFBEIS**. Materials for fluorescence-based optical chemical sensors. *J. Mater. Chem*, 2005, vol. 15, 2657-2669, https://doi.org/10.1039/B501536G
- **O. S. WOLFBEIS**. Fiber-optic chemical sensors and biosensors. *Anal. Chem*, 2008, vol. 80, 4269-4283, https://doi.org/10.1021/ac060490z
- **X. DONG WANG** ; **O. S. WOLFBEIS**. Fiber-Optic Chemical Sensors and Biosensors. *Anal.Chem*, 2008, vol. 85 (2013), 487-508, https://doi.org/10.1021/ac303159b
- **C. JESUS** ; **S. F. O. SILVA** ; **M. CASTANHEIRA** ; **G. GONZALEZ AGUILAR** ; **O. FRAZO** ; **P.A.S. JORGE** ; **J.M. BAPTISTA**. Measurement of acetic acid using a fiber Bragg grating interferometer. *Meas. Sci. Technol*, 2009, vol. 20, 125201, https://iopscience.iop.org/article/10.1088/0957-0233/20/12/125201
- **A. L. MEDINA-CASTILLO** ; **L. RUZIC** ; **B. NIDETZKY** ; **JUAN M. BOLIVAR**. Hydrophilic Nonwoven Nanofiber Membranes as Nanostructured Supports for Enzyme Immobilization. *ACS Appl. Polym. Mater.*, 2022, vol. 4, 6054-6066, https://doi.org/10.1021/acsapm.2c00863
- **M.D. FERNÁNDEZ-RAMOS** ; **M. BASTIDA-ARMESTO** ; **R. BLANC-GARCIA** ; **L. F. CAPITÁN-VALLVEY** ; **A. L. MEDINA-CASTILLO**. Design of colourimetric nanostructured sensor phases for simple and fast quantification of low concentrations of acid vapors. *Microchim Acta*, 2023, vol. 190, 160, https://doi.org/10.1007/s00604-023-05723-0
- **A. L. MEDINA-CASTILLO** ; **J. F. FERNANDEZ-SANCHEZ** ; **A. SEGURA-CARRETERO** ; **A. FERNANDEZ-GUTIERREZ**. Design and synthesis by ATRP of novel, water-insoluble, lineal copolymers and their application in the development of fluorescent and pH-sensing nanofibres made by electrospinning. *J. Mater. Chem.*, 2011, vol. 21, 6742, https://doi.org/10.1039/C1JM10209E